# EUROPÄISCHE PATENTSCHRIFT

(11) **EP 1 183 923 B1**
(45) Veröffentlichungstag und Bekanntmachung des Hinweises auf die Patenterteilung: **04.10.2006**
(21) Anmeldenummer: 01120298.3
(22) Anmeldetag: 24.08.2001
(51) Int. Cl.: A01C 17/00, A01C 15/00

(54) **Verfahren zum Ausbringen von Düngemittel und Vorrichtung hierzu**
Method for spreading fertilizer and corresponding device
Méthode pour épandre de l'engrais et dispositif correspondant

(30) Priorität: 31.08.2000 DE 10042792
(43) Veröffentlichungstag der Anmeldung: 06.03.2002
(73) Patentinhaber: Amazonen-Werke H. Dreyer GmbH & Co. KG, 49205 Hasbergen (DE)
(72) Erfinder: Dreyer, Justus, 49205 Hasbergen (DE)

(56) Entgegenhaltungen:
- EP-A- 0 532 055
- EP-A- 0 551 949
- WO-A-94/03041

## Beschreibung

Die Erfindung betrifft ein Verfahren zum Ausbringen von Düngemittel mittels eines Zentrifugaldüngerstreuers sowie eine Vorrichtung zur Durchführung dieses Verfahrens.

Durch die EP 0 347 643 A1 ist ein Verfahren zum Ausbringen von Düngemitteln mittels eines Zentrifugaldüngerstreuers und eine hierfür geeignete Vorrichtung bekannt. Bei diesem Zentrifugaldüngerstreuer sind im vorderen Bereich außerhalb der Umlaufbahn der Wurfschaufeln Leitelemente zur Begrenzung der von den Wurfschaufeln in nach vorn gerichteter Richtung über den vorderen Begrenzungsbereich des Vorratsbehälters abgeschleuderten Düngemittelpartikel bekannt. Diese Leitelemente lenken den Düngemittelstrom so um, daß die quer zur Fahrtrichtung zwischen einer Schleuderscheibenachse und dem Streufächerrand gemessene Streubreite des Streufächers zumindest annähernd unverändert erhalten bleibt, wobei der von dem Streufächer aufgespannte Streuwinkelbereich aber verringert wird, wobei der verringerte Fächer mit einer Begrenzungslinie etwa quer zur Fahrtrichtung des Streuers liegt.

Mittels dieser Leitelement läßt sich jedoch nicht die Wurfweite der Düngerpartikel zum Grenzstreuen verringern.

Durch die DE 198 43 745 A1 ist ein Verfahren zum Rand- oder Grenzstreuen mit einem einseitig zu Feldrandgrenze stark abfallenden Streubild bekannt. Hierzu wird eine Grenzstreueinrichtung, die Leitelemente aufweist in den Düngemittelstrom eingebracht, um die Wurfweite zur Grenzseite zu begrenzen, damit ein im Rand- bzw. Feldgrenzbereich stark abfallende Streuflanken aufweisendes Streubild erzielt wird.

Der Erfindung liegt die Aufgabe zugrunde, für das eingangs beschriebene Verfahren eine Grenzstreueinrichtung zu schaffen.

Diese Aufgabe wird erfindungsgemäß durch die Merkmal des Patentanspruches 1 gelöst. Hierbei wird die Anordnung der Grenzstreueinrichtung mit den Leitelementen zusätzlich zu der Anordnung zu den Leitelementen, die die Wurfrichtung des Streufächers nach vorn begrenzen, eingesetzt. Während die Streuwinkelbegrenzungseinrichtung, die den Streuwinkelbereich verringert, sowohl beim Normaldüngen wie beim Grenzstreuen eingesetzt wird, wird die Leiteinrichtung zum Grenzstreuen nur zum Grenzstreuen in den Streufächer eingebracht. Hierbei sind die Leitelemente der Streuwinkelbegrenzungseinrichtung und der Grenzstreueinrichtung aufeinander abgestimmt, um beim Grenzstreuen das gewünschte Streubild mit der im Grenzbereich steil abfallenden Streuflanke zu erreichen.

Eine Vorrichtung zur Durchführung des Verfahrens wird mit den Merkmalen des Patentanspruches 2 erreicht.

Es ist auch möglich, zum Grenzstreuen die Leiteinrichtung, die den Wurfwinkel begrenzt, aus dem Düngerstrom herauszubringen und die andere Leiteinrichtung zum Grenzstreuen in den Düngerstrom einzubringen, wie dieses im Anspruch 3 beansprucht wird.

Andererseits ist es auch möglich, die Leiteinrichtung zur Begrenzung des Wurfwinkelbereiches im Düngerstrom belassen und die Grenzstreueinrichtung in den Düngerstrom an die erste Leiteinrichtung anschließend in den Düngerstrom einzubringen.

Um die Aufprallenergie, mit welcher die Düngerpartikel auf die Stirnseiten der Leitelemente auftreffen, zu verringern, ist vorgesehen, daß diese Leiteinrichtung auf ihrer der Schleuderseite zugewandten Stirnseiten einen aus einem elastischen Material bestehenden "abgepolsterten" Bereich aufweist. Dieses elastische Material können Gummi-, Kunststoffstege, beispielsweise aus Polyurethan bestehenden Stege sein.

Weitere Einzelheiten der Erfindung sind den übrigen Unteransprüchen, der Beispielsbeschreibung und den Zeichnungen zu entnehmen. Hierbei zeigen
- Fig. 1: den Schleuderstreuer in der Ansicht von hinten und in Prinzipdarstellung,
- Fig. 2: den Schleuderdüngerstreuer gemäß Fig. 1 in der Ansicht II-II,
- Fig. 3: einen weiteren Schleuderdüngerstreuer in der Ansicht von hinten und in Prinzipdarstellung und
- Fig. 4: den Schleuderdüngerstreuer in der Ansicht IV-IV.

Der Schleuderdüngerstreuer weist den Vorratsbehälter 1, den Rahmen 2 und die unterhalb der beiden trichterförmigen Behälterteile 3 und 4 rotierend angetriebenen Schleuderscheiben 5, auf denen die Wurfschaufeln 6 angeordnet sind, auf. Den Schleuderscheiben 5 werden die sich im Vorratsbehälter 1 befindlichen Düngemittel über die in den Bodenplatten 7 angeordneten Auslauföffnungen, welche jeweils mittels der Schieber 8 in unterschiedlichen Öffnungsweiten einstellbar und verschließbar sind, zugeführt. Die Auslauföffnung, die sich in den Bodenplatten 7 befinden, bilden zusammen mit den Schiebern 8 die sog. Dosierorgane. Die den um die aufrechten Achsen 9 rotierend antriebenen Schleuderscheiben 5 zugeführten Düngemittelpartikel werden von den Wurfschaufeln 6 in Breitverteilung über die zu bestreuenden Fläche ausgestreut. Die Schleuderscheiben 5 werden in einer entgegengesetzten Drehrichtung, wie durch die Pfeile 10 gekennzeichnet ist, angetrieben, wobei sie entgegen der Fahrtrichtung 11 auf der Rückseite des Schleuderdüngerstreuers auseinander drehen. Die Düngepartikel werden von den Wurfschaufeln 6 in Richtung der gestrichelten Linie 12 von den Schleuderscheiben 5 abgeschleudert, wobei die von den Wurfschaufeln 6 seitlich schräg nach vorn geschleuderten Düngemittelpartikel auf die Leitelement 13 der als Streufächerbegrenzungseinrichtung 14 ausgebildeten Leiteinrichtung auftreffen. Die Streufächerbegrenzungseinrichtung 14 ist auf jeder Seite der Schleuderscheibe 5 angeordnet, und lenken die Düngerpartikel in der quer zur der Fahrtrichtung 11 liegenden Richtung 15 seitlich des Streuers um. Die jeweils rechts und links des Schleuderdüngerstreuers angeordneten Streufächerbegrenzungseinrichtungen 14 sind spiegelbildlich gleich ausgerichtet, wobei die einzelnen Leitelemente 13 in ihrem vorderen, den Schleuderscheiben 5 zugewandten Bereich zunächst etwa tangenzial zur Abwurfrichtung der Düngemittelpartikel verlaufen und über die sich anschließende Krümmung quer zur Fahrtrichtung 11 in Richtung 15 umgelenkt werden. Die einzelnen Leitelemente 13 sind durch den Rahmen 15 und die Verstärkungstreben 17 in zu einem Leitkasten 18 zusammengefaßt. Das vorderste Leitelement 19 schließt unmittelbar an den vorderen, die Schleuderscheiben 5 nach vorn abschirmenden Leitschirm 20 an.

Die Leitelemente 13 der Streufächerbegrenzungseinrichtung 14 nehmen die Umlenkung der Düngepartikel derart vor, daß die quer zur Fahrtrichtung 11 zwischen einer Schleuderscheibenachse 9 und dem Streufächerrand gemessene Streubreite des Streufächers zumindest annähernd unverändert erhalten bleibt, wobei der von dem Streufächer aufgespannte Streuwinkelbereich aber verringert wird, wobei der verringerte Fächer mit einer Begrenzungslinie etwa quer zur Fahrtrichtung 11 des Streuers liegt.

Entgegen der Drehrichtung 10 der Schleuderscheiben gesehen ist vor den Leitelementen 13 der Streufächerbegrenzungseinrichtung 14 die Grenzstreueinrichtung 21, welche die Leitelemente 22 aufweist, angeordnet. Diese Leitelemente 22 nehmen eine Umlenkung beim Grenzstreuen derart vor, daß ein Streubild mit einer zur Grenze steil abfallenden Streuflanke erzeugt wird, und die Wurfweite der Düngemittelpartikel im Grenzbereich begrenzt wird, wie dies beispielsweise in der deutschen Offenlegungsschrift 198 43 745 A1 beschrieben ist. Die Düngepartikel werden, wie die Pfeile 23 andeuten, durch die Leitelemente 22 umgelenkt.

Zum Grenzstreuen werden also zusätzlich zu den Leitelementen 13 der Streufächerbegrenzungseinrichtung 14 gleichzeitig die Leitelemente 22 der Grenzstreueinrichtung 21 in den Streufächerstrom eingebracht. Die Grenzstreueinrichtung 21 ist mittels geeigneter Schwenkmechanismen in nicht dargestellter Weise an dem Rahmen 2 bzw. an dem Vorratsbehälter 1 befestigt, um die Grenzstreueinrichtung 21 zum Grenzstreuen in Düngemittelstrom mit geeigneter Einstellmittel hineinzubringen und für das normale Streuen aus dem Düngemittelstrom herauszubringen.

Auf der Stirnseite der Leitelemente, die den Wurfschaufel benachbart sind, können einen in nicht dargestellter Weise aus einem elastischen Material bestehenden abgepolsterten Bereich aufweisen. Dieses Material kann Gumm, Kunststoff etc. sein. Mittels dieses aufgepolsterten Stirnseiten soll erreicht werden, daß die Düngerkörner nicht zerschlagen werden Dieses elastische Material kann, auf die Stirnseite und/oder den vorderen Bereich der Leitelemente 13 und 22 aufgeklebt, aufgeklemmt oder in anderer geeigneter Weise befestigt sein.

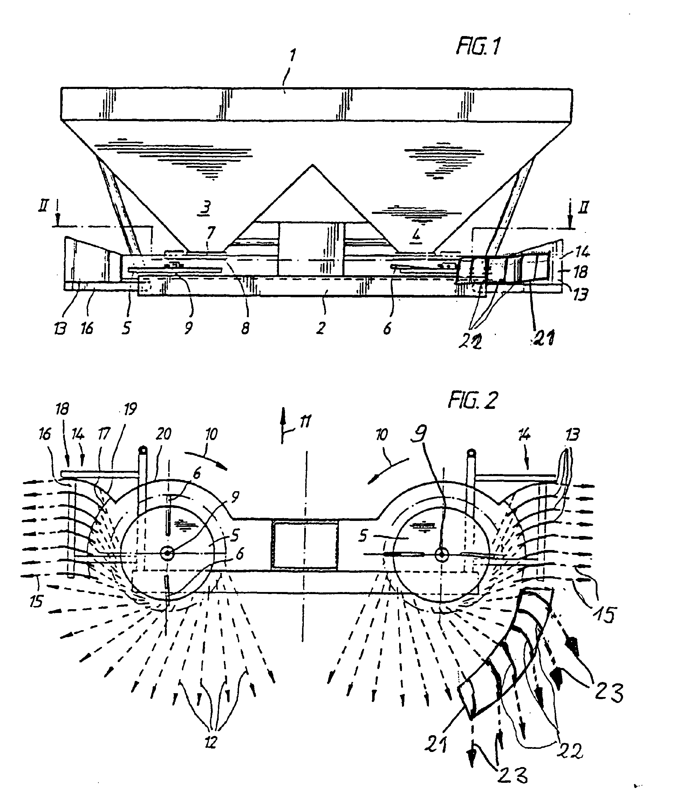

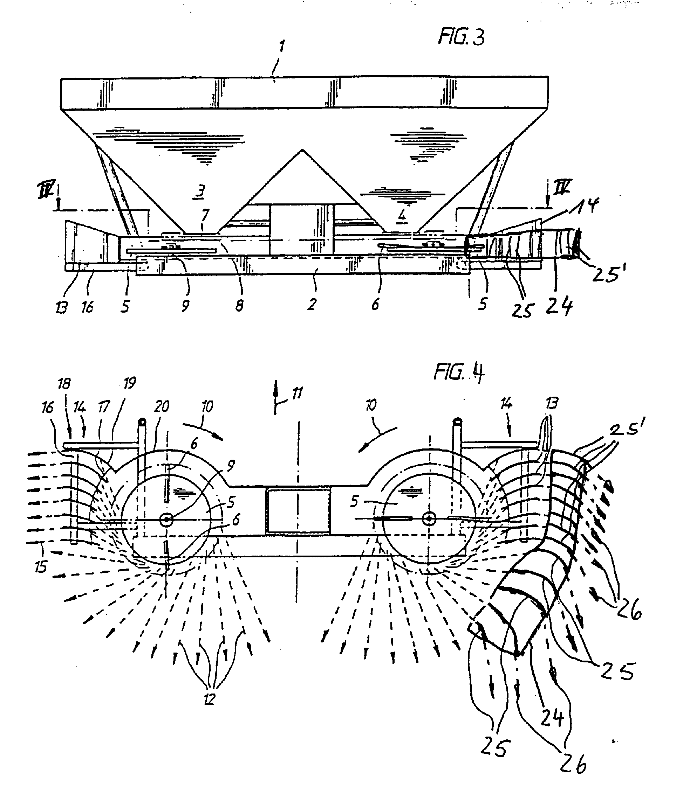

Das Ausführungsbeispiel gemäß der Fig. 3 und 4 unterscheidet sich von dem Ausführungsbeispiel gemäß den Fig. 1 und 2 in der anderen Ausgestaltung der Grenzstreueinrichtung 24. Bezüglich des Grundaufbaus des Düngerstreuers und der Streufächerbegrenzungseinrichtung 14 unterscheidet sich der Schleuderdüngerstreuer gemäß den Fig. 3 und 4 nicht von den Schleuderdüngerstreuer gemäß den Fig. 1 und 2.

Die Grenzstreueinrichtung 24 ist hier gegenüber der Grenzstreueinrichtung 21 gemäß Fig. 1 und 2 verlängert ausgebildet, wobei sie auch die von den Leitelementen 13 der Streufächerbegrenzungseinrichtung 14 umgelenkten Düngemittelstrom weiter umlenkt. Auch diese Grenzstreueinrichtung 24 ist mittels geeigneter Schwenkmechnismusmittel am Rahmen 2 des Schleuderdüngerstreuers befestigt und mittels geeigneter Einstellmittel in den Düngemittelstrom einzubringen oder aus ihm herauszuschwenken. Die Leitelemente 25 der Grenzstreueinrichtung 24 sind derart ausgebildet, daß sich die Leitelemente 25' im Bereich der Streufächerbegrenzungseinrichtung 14 an die Leitelemente 13 anschließen. Hierbei sind die Leitelemente 25' dieser Leiteinrichtung 24 in Drehrichtung 10 der Schleuderscheibe 5 gesehen zumindest gegenüber den Leitelementen 13 der ersten Leiteinrichtung 14 zurückversetzt angeordnet, so daß in jedem Fall sichergestellt ist, daß der von den Leitelementen 13 umgelenkte Düngemittelstrom nicht auf die Stirnseiten der Leitelemente 25' auftrifft, sondern auf die Flächen der Leitelemente 25' zur weiteren Umlenkung geleitet wird. Der Düngemittelstrom wird den Leitelementen 25 und 25' der Grenzstreueinrichtung 24, wie durch die Pfeile 26 angedeutet ist, umgelenkt. Diese Grenzstreueinrichtung 24 erzeugt ein Streubild mit einer zur Grenze steil abfallenden Streuflanke.

Es ist auch möglich, die Streufächerbegrenzungseinrichtung 14, wenn das Grenzstreuen durchgeführt werden soll, mittels geeigneter Mittel aus dem Düngemittelstrom nach oben oder unten herauszubringen. Es kann dann eine entsprechend Fig. 3 und 4 gestaltete Grenstreueinrichtung ohne die Streufächerbegrenzungseinrichtung 14 beim Grenzstreuen zum Einsatz gelangen.

## Patentansprüche

1. Verfahren zum Ausbringen von Düngemitteln mittels eines Zentrifugaldüngerstreuers, der die Düngemittel mittels Schleuderscheiben (5) fächerartig über die zu bestreuende Fläche verteilt, wobei man die Schleuderscheiben (5) in entgegengesetztem Drehsinn (10) zueinander antreibt und wobei man einen Teil der von den Schleuderscheiben (5) abgeworfenen Partikel mittels von den Schleuderscheiben (5) weggerichteten Leitelementen (13,22,25,25') in bestimmte Richtungen umlenkt, wobei zumindest zwei verschiedene Leitelemente (13,22,25,25') aufweisende Leiteinrichtungen (14,21,24) vorgesehen sind, welche getrennt und/oder gemeinsam in den PartikeIstrom bringbar sind
wobei die Leitelemente (13) der einen Leiteinrichtung (14) die Umlenkung so vornehmen, dass die quer zur Fahrtrichtung (11) zwischen einer Schleuderscheibenachse (9) und dem Streufächerrand gemessene Streubreite des Streufächers zumindest annähernd unverändert bleibt, der von dem Streufächer aufgespannte Streuwinkelbereich aber verringert wird, wobei der verringerte Fächer mit einer Begrenzungslinie etwa quer zur Fahrtrichtung (11) des Streuers liegt,
wobei die Leitelemente (22,25,25') der anderen Leiteinrichtung (21,24) die Umlenkung so vornehmen, dass ein Streubild mit einer zur Grenze steil abfallenden Streuflanke erzeugt und die der Wurfweite der Düngerpartikel im Grenzbereich begrenzt wird.

2. Vorrichtung zur Durchführung des Verfahrens nach Anspruch 1, mit Zentrifugaldüngerstreuer, der die Düngemittel mittels Schleuderscheiben (5) fächerartig über die zu bestreuende Fläche verteilt, wobei man die Schleuderscheiben (5) in entgegengesetztem Drehsinn (10) zueinander antreibt und wobei man einen Teil der von den Schleuderscheiben (5) abgeworfenen Partikel mittels von den Schleuderscheiben (5) weggerichteten Leitelementen in bestimmte Richtungen umlenkt, wobei zumindest zwei verschiedene die Leitelemente (13,22,25,25') aufweisende Leiteinrichtungen (14,21,24) vorgesehen sind, welche getrennt und/oder gemeinsam in den PartikeIstrom bringbar sind
wobei die Leitelemente (13) der einen Leiteinrichtung (14) die Umlenkung so vornehmen, dass die quer zur Fahrtrichtung (11) zwischen einer Schleuderscheibenachse (9) und dem Streufächerrand gemessene Streubreite des Streufächers zumindest annähernd unverändert bleibt, der von dem Streufächer aufgespannte Streuwinkelbereich aber verringert wird, wobei der verringerte Fächer mit einer Begrenzungslinie etwa quer zur Fahrtrichtung (11) des Streuers liegt,
wobei die Leitelemente (22,25,25') der anderen Leiteinrichtung (21,24) die Umlenkung so vornehmen, dass ein Streubild mit einer zur Grenze steil abfallenden Streuflanke erzeugt und die der Wurfweite der Düngerpartikel im Grenzbereich begrenzt wird.

3. Vorrichtung nach Anspruch 2, **dadurch gekennzeichnet, dass** zur Durchführung des Grenzstreuens die eine Leiteinrichtung (14) aus dem Düngerstrom nach oben oder unten mittels geeigneter Mittel wegbewegbar ist und die andere Leiteinrichtung (21,24) mittels geeigneter Mittel in den Düngerstrom bringbar ist.

4. Vorrichtung nach Anspruch 2, **dadurch gekennzeichnet, dass** zur Durchführung des Grenzstreuen die andere Leiteinrichtung (24) in den Düngerstrom mittels geeigneter Mittel bringbar ist, wobei diese Leiteinrichtung (24) derart ausgebildet ist, dass sich die Leitelemente (25') dieser Leiteinrichtung (24) an die Leitelemente (13) der ersten Leiteinrichtung (14) anschließen.

5. Vorrichtung nach Anspruch 5, **dadurch gekennzeichnet, dass** die Leitelemente (25') der anderen Leiteinrichtung (24) in Drehrichtung (10) der Schleuderscheibe (5) gesehen zumindest etwas gegenüber der Leitelemente (13) der ersten Leiteinrichtung (14) zurückgesetzt angeordnet sind.

6. Vorrichtung nach einem oder mehreren der vorstehenden Ansprüche, **dadurch gekennzeichnet, daß** die Leiteinrichtung auf ihrer Schleuderscheibe zugewandten Stirnseiten einen aus einem elastischen Material bestehenden "abgepolsterten" Bereich aufweisen.

7. Vorrichtung nach Anspruch 6, **dadurch gekennzeichnet, daß** das elastische Material Gummi, Kunststoff, wie beispielsweise Polyurethan ist.

## Claims

1. Method for the distribution of fertilisers through the intermediary of a centrifugal fertiliser spreader, which distributes the fertilisers through the intermediary of centrifugal discs (5) in a compartment-shaped manner over the areas to be covered, wherein the centrifugal discs (5) are each driven in opposite directions of rotation (10) and wherein a portion of the particles thrown by the centrifugal discs (5) is deflected in specific directions through the intermediary of guide members (13, 22, 25, 25') that are directed away from the centrifugal discs, wherein there are provided at least two different guide devices (14, 21, 14), which include the guide members (13, 22, 25, 25') and which are moveable separately and/or together into the particle flow,
wherein the guide members (13) of the one guide device (14) perform the deflection such that the spreading width of the distributing compartment measured at right angles to the direction of travel (11) between one centrifugal disc axis (9) and the edge of the distributing compartment remains at least approximately unchanged, the angular range of distribution covered by the distributing compartment, however, is reduced, wherein the reduced compartment lies with a boundary line approximately at right angles to the direction of travel (11) of the distributing machine,
wherein the guide members (22, 25, 25') of the other guide device (21, 24) perform the deflection such that a spreading pattern is created with a spreading edge that drops steeply towards the boundary and which is defined by the throwing width of the particles of fertiliser in the boundary region.

2. Apparatus for accomplishing the method according to claim 1, with a centrifugal fertiliser spreader, which distributes the fertiliser through the intermediary of centrifugal discs (5) in a compartment-shaped manner over the area to be covered, wherein the centrifugal discs (5) are each driven in opposite directions of rotation (10) and wherein a portion of the particles thrown by the centrifugal discs (5) are deflected in specific directions through the intermediary of guide members that are directed away from the centrifugal discs (5), wherein there are provided at least two different guide devices (14, 21, 24), which include the guide members (13, 22, 25, 25') and which are moveable separately and/or together into the particle flow
wherein the guide members (13) of the one guide device (14) perform the deflection such that the distributing width of the distributing compartment measured at right angles to the direction of travel (10) between a centrifugal disc axis (9) and the edge of the distributing compartment remains at least approximately unchanged, the angular range of distribution covered by the distributing compartment, however, is reduced, wherein the reduced compartment lies with a boundary line approximately at right angles to the direction of travel (10) of the distributing machine,
wherein the guide members (22, 25, 25') of the other guide device (21, 24) perform the deflection such that a spreading pattern is created with a spreading edge that drops steeply towards the boundary and which is defined by the throwing width of the particles of fertiliser in the boundary region.

3. Apparatus according to claim 2, **characterised in that** to accomplish the limited distributing operation, the one guide device (14) is moveable upwards or downwards away from the fertiliser flow through the intermediary of suitable means and the other guide device (21, 24) is moveable into the fertiliser flow through the intermediary of suitable means.

4. Apparatus according to claim 2, **characterised in that** to accomplish the limited distributing operation the other guide device (24) is moveable into the fertiliser flow through the intermediary of suitable means,
wherein this guide device (24) is configured in such a manner that the guide members (25') of this guide device (24) abut against the guide members (13) of the first guide device (14).

5. Apparatus according to claim 5, **characterised in that** the guide members (25') of the other guide device (24) when viewed in the direction of rotation (10) of the centrifugal disc (5) are disposed set back substantially opposite the guide members (13) of the first guide device (14).

6. Apparatus according to one or more of the preceding claims, **characterised in that** the guide device, on its end faces facing the centrifugal disc, includes a "cushioned" region comprising a resilient material.

7. Apparatus according to claim 6, **characterised in that** the resilient material is rubber, plastics material, such as, for example, polyurethane.

## Revendications

1. Procédé d'épandage d'engrais à l'aide d'un épandeur centrifuge d'engrais qui repartit l'engrais à l'aide de disques d'épandage (5), en éventail sur la surface à traiter,
les disques d'épandage (5) étant entraînés suivant un sens de rotation opposé (10), et une partie des particules éjectées par les disques d'épandage (5) étant dirigée dans des directions définies par des éléments de guidage (13, 22, 25, 25') s'écartant des disques d'épandage (5), avec au moins deux installations de guidage (14, 21, 24) ayant des éléments de guidage différents (13, 22, 25, 25') prévues pour être introduites séparément et/ ou en commun dans le flux de particules,
selon lequel
les éléments de guidage (13) d'une installation de guidage (14) assurent la déviation pour laisser pratiquement inchangée la largeur d'épandage de l'éventail d'épandage mesurée entre un axe de disque d'épandage (9) et le bord de l'éventail d'épandage dans la direction transversale à la direction de déplacement (11), mais on diminue la plage de l'angle d'épandage sous tendu par l'éventail d'épandage et l'éventail diminué a une ligne limite qui se situe sensiblement en travers de la direction de déplacement (11) de l'épandeur, et
- les éléments de guidage (22, 25, 25') de l'autre installation de guidage (21, 24) assurent la déviation pour générer une image d'épandage ayant un flanc d'épandage chutant de manière raide vers la limite et la portée d'éjection des particules d'épandage est limitée dans la zone limite.

2. Dispositif pour la mise en oeuvre du procédé selon la revendication 1, à l'aide d'un épandeur centrifuge d'engrais qui répartit l'engrais à l'aide de disques d'épandage (5) suivant un éventail sur la surface à traiter, les disques d'épandage (5) étant entraînés en rotation suivant des sens de rotation opposés (10), et
une partie des particules éjectées par les disques d'épandage (5) étant déviée dans des directions définies à l'aide d'éléments de guidage s'écartant des disques d'épandage,
au moins deux installation de guidage (14, 21, 24) différentes munies d'éléments de guidage (13, 22, 25, 25') étant prévues pour être mises séparément et/ ou globalement dans le flux de particules,
dans lequel les éléments de guidage (13) de l'installation de guidage (14) assurent la déviation pour que la largeur d'épandage mesurée transversalement à la direction de déplacement (11) entre un axe de disque d'épandage (9) et le bord de l'éventail d'épandage soit au moins sensiblement invariable, et que la plage de l'angle d'épandage sous-tendu par l'éventail d'épandage soit diminuée, l'éventail diminué se situant sensiblement transversalement à la direction de déplacement (11) de l'épandeur avec sa ligne de limitation, et
les éléments de guidage (22, 25, 25') de l'autre installation de guidage (21, 24) assurent la déviation pour générer une image d'épandage avec un flanc d'épandage chutant de manière abrupte vers une limite, et la portée des particules d'engrais est limitée dans la plage limite.

3. Dispositif selon la revendication 2,
**caractérisé en ce que**
pour mettre en oeuvre l'épandage en limite, une installation de guidage (14) est extraite du flux d'engrais vers le haut ou vers le bas à l'aide de moyens appropriés et l'autre installation de guidage (21, 24) est introduite dans le flux d'engrais à l'aide de moyens appropriés.

4. Dispositif selon la revendication 2,
**caractérisé en ce que**
pour effectuer l'épandage en limite, on introduit l'autre installation de guidage (24) dans le flux d'engrais à l'aide de moyens appropriés,
cette installation de guidage (24) étant réalisée pour que les éléments dé guidage (25') de cette installation de guidage (24) rejoignent les éléments de guidage (13) de l'autre installation de guidage (14).

5. Dispositif selon la revendication 4,
**caractérisé en ce que**
les éléments de guidage (25') de l'autre installation de guidage (24) sont prévus en retrait dans la direction de rotation (10) de l'autre disque d'épandage (5) au moins sensiblement par rapport aux éléments de guidage (13) de la première installation de guidage (14).

6. Dispositif selon l'une quelconque des revendications précédentes,
**caractérisé en ce que**
l'installation de guidage présente sur les faces frontales tournées vers son disque d'épandage, une zone rembourrée formée d'au moins une matière élastique.

7. Dispositif selon la revendication 6,
**caractérisé en ce que**
la matière élastique est du caoutchouc, ou une matière plastique telle que par exemple du polyuréthane.
